(19) **Europäisches Patentamt**
**European Patent Office**
**Office européen des brevets**

(11) **EP 4 310 934 A1**

(12) **EUROPEAN PATENT APPLICATION**
published in accordance with Art. 153(4) EPC

(43) Date of publication:
**24.01.2024 Bulletin 2024/04**

(21) Application number: **21930845.9**

(22) Date of filing: **18.03.2021**

(51) International Patent Classification (IPC):
***H01M 4/13*** (2010.01)    ***H01M 10/0587*** (2010.01)

(52) Cooperative Patent Classification (CPC):
**H01M 4/13; H01M 10/0587**

(86) International application number:
**PCT/CN2021/081625**

(87) International publication number:
**WO 2022/193253 (22.09.2022 Gazette 2022/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NingDe Amperex Technology Limited 352100 Ningde City Fujian (CN)**

(72) Inventors:
• YING, Dou
**Ningde, Fujian 352106 (CN)**
• LIU, Shengqi
**Ningde, Fujian 352106 (CN)**
• WANG, Kefei
**Ningde, Fujian 352106 (CN)**

(74) Representative: **Klunker IP Patentanwälte PartG mbB Destouchesstraße 68 80796 München (DE)**

(54) **ELECTROCHEMICAL DEVICE AND ELECTRONIC DEVICE USING SAME**

(57)    An electrochemical device and an electronic device using same. The electrochemical device includes an electrode plate. The electrode plate includes: a first current collector; a first tab protruding from the first current collector; a first active material layer disposed on at least one surface of the first current collector; and an insulation layer disposed along a side edge of the first current collector towards the first tab and abutted against the first active material layer. The insulation layer includes a first region and a second region, the first region is disposed towards the first tab, the second region is disposed away from the first tab and abutted against the first active material layer, and a thickness of the first region of the insulation layer is less than a thickness of the second region of the insulation layer. According to the electrochemical device of this application, a ratio of a thickness of the insulation layer to a thickness of the first active material layer and a thinned shape of the insulation layer are controlled to improve stress uniformity of the electrode plate in a rolling process.

FIG. 3

**EP 4 310 934 A1**

Processed by Luminess, 75001 PARIS (FR)

**Description**

**TECHNICAL FIELD**

This application relates to the technical field of batteries, and in particular, to an electrochemical device and an electronic device using same.

**BACKGROUND**

As the demand for high energy density batteries increases, it is often necessary to dispose an active material layer with a relatively large coating weight on an electrode plate to increase a battery capacity. However, the relatively large coating weight (a thick electrode) generally results in a relatively large thickness of the active material layer, such that there is a relatively obvious thickness step between a burr-preventing insulation layer coated on an edge of the electrode plate and the active layer, affecting an appearance of the electrode plate. Moreover, when an insulation coating is coated, under dual influences of an expansion effect of a slurry fluid of the insulation coating under an extra stress action of a surface of a coating device and a casting phenomenon caused by slurry surface tension in the drying process, an edge of the insulation coating will have a thick-edge morphology. The thick edge of the insulation coating will cause an edge swelling phenomenon when the electrode plate is wound, and in severe cases, the electrode plate may be broken; and meanwhile, when the electrode plate is rolled, tension distribution of the electrode plate will be unbalanced, and an alignment degree does not meet requirements, thus affecting a machining size of the electrode plate.

In order to solve the above problems, in the prior art, when the electrode is manufactured, a coating size of the insulation layer is usually greater than an actually required size of the electrode, and then a thick-edge region at the edge of the electrode plate is cut away. However, the coating size of the insulation layer is usually greater than the actually required size of the electrode, and a thick edge exists, which will excessively waste materials. It is necessary for a person skilled in the art to consider how to find a solution that can not only improve the appearance of the electrode plate of the electrode but also eliminate the edge swelling phenomenon of the insulation layer to increase a yield of a battery product while meeting a high energy density demand.

**SUMMARY**

In order to solve the problems in the prior art caused by an excessive thickness of an electrode plate coating, an embodiment of this application provides an electrochemical device, including an electrode plate. The electrode plate includes: a first current collector; a first tab protruding from the first current collector; a first active material layer disposed on at least one surface of the first current collector; and an insulation layer disposed along a side edge of the first current collector towards the first tab and abutted against the first active material layer. The insulation layer includes a first region and a second region, the first region is disposed towards the first tab, the second region is disposed away from the first tab and abutted against the first active material layer, and a thickness of the first region of the insulation layer is less than a thickness of the second region of the insulation layer.

In a possible implementation, the first region includes a first surface, the first surface is away from the first current collector, a plane where the first surface is located intersects a plane where the first current collector is located to form an acute angle $\alpha$, the second region has a thickness of H, and the insulation layer has a width of W, wherein $W/H \geq \cot\alpha$.

In a possible implementation, the acute angle $\alpha$ ranges from 5° to 75°.

In a possible implementation, the thickness H of the second region ranges from 20 $\mu$m to 100 $\mu$m, and the width W of the insulation layer ranges from 1 mm to 10 mm.

In a possible implementation, a thickness L of the first active material layer ranges from 30 $\mu$m to 200 $\mu$m.

In a possible implementation, the thickness H of the second region and the thickness L of the first active material layer satisfy a following relationship: $0.3 \leq H/L \leq 0.8$.

In a possible implementation, the first active material layer has a coating weight ranging from 0.06 mg/mm$^2$ to 0.35 mg/mm$^2$.

In a possible implementation, the first active material layer has a compacted density ranging from 2 g/cc to 6 g/cc.

In a possible implementation, the insulation layer includes an inorganic particle and a binder, the inorganic particle includes at least one of boehmite, aluminum oxide, zirconium oxide, boron oxide or hexagonal boron nitride, and the binder includes at least one of polyvinylidene fluoride, a vinylidene fluoride-hexafluoropropylene copolymer, polyamide, polyacrylonitrile, polyacrylate, polyacrylic acid, polyacrylate or sodium carboxymethylcellulose.

This application further provides an electronic device. The electronic device includes the foregoing electrochemical device.

Compared with the prior art, according to the electrochemical device of this application, the insulation layer with the first region and the second region of different thicknesses is disposed on an outer side of the first active material layer, such that the thickness of the second region towards the first active material layer is greater than the thickness of the first region away from the first active material layer. That is, a region of the insulation layer towards an edge of the electrode plate is thinned, but the thinned region is controlled not to extend to the first active material layer. In the case of eliminating a thick-edge morphology, the loss of an active material of the first active material layer is avoided, on the premise of increasing an energy density of the electrochemical device, the thick-edge morphology is eliminated to overcome the problem of edge swelling of the electrode plate, and a thickness difference between the first active material layer and the insulation layer is reduced.

**BRIEF DESCRIPTION OF DRAWINGS**

FIG. 1 is a schematic plan diagram of an electrochemical device according to an embodiment of this application.
FIG. 2 is a schematic plan diagram of an electrode plate of an electrochemical device according to an embodiment of this application.
FIG. 3 is a schematic sectional diagram in a III-III direction in FIG. 2.
FIG. 4 is a schematic three-dimensional diagram of an electronic device according to an embodiment of this application.

Reference numeral description of main components

| | |
|---|---|
| Electrochemical device | 1 |
| Electrode plate | 10 |
| First current collector | 11 |
| First tab | 12 |
| First active material layer | 13 |
| Insulation layer | 14 |
| First region | 141 |
| Second region | 142 |
| First surface | 143 |
| Acute angle | $\alpha$ |
| Electronic device | 100 |

This application is further described by using the following specific implementations with reference to the foregoing accompanying drawings.

**DETAILED DESCRIPTION OF EMBODIMENTS**

The following will refer to the accompanying drawings to more completely describe the content of this application. Exemplary embodiments of this application are shown in the accompanying drawings. However, this application may be implemented in many different forms and is not to be constructed as limited to the exemplary implementations described herein. These exemplary implementations are provided for the purpose of making this application thorough and complete and fully communicating the scope of this application to a person skilled in the art. Similar reference numerals indicate same or similar components.

The terms used herein are merely for the purpose of describing the specific exemplary embodiments and are not intended to limit this application. As used herein, singular forms "a/an", "one" and "the" are intended to include plural forms as well, unless the context expressly states otherwise. In addition, "include" and/or "comprise" and/or "have", when used herein, refers to the presence of integers, steps, operations, components and/or assemblies, but does not exclude the presence or addition of one or more other features, regions, integers, steps, operations, components, assemblies, and/or groups thereof.

Unless otherwise defined, all terms (including technical and scientific terms) used herein have the same meanings as those generally understood by a person of ordinary skill in the art of this application. In addition, unless explicitly defined in the text, terms such as those defined in generic dictionaries are to be constructed as having the same meanings as they have in related technologies and the content of this application, and will not to be constructed as having idealized or overly formal meanings.

The following content will describe the exemplary embodiments in conjunction with the accompanying drawings. It is to be noted that the components depicted in the reference drawings are not necessarily shown to scale; and the same or similar components will be given the same or similar reference numerals for representing or similar technical terms.

Hereinafter, specific implementations of this application are further described in detail with reference to the accompanying drawings.

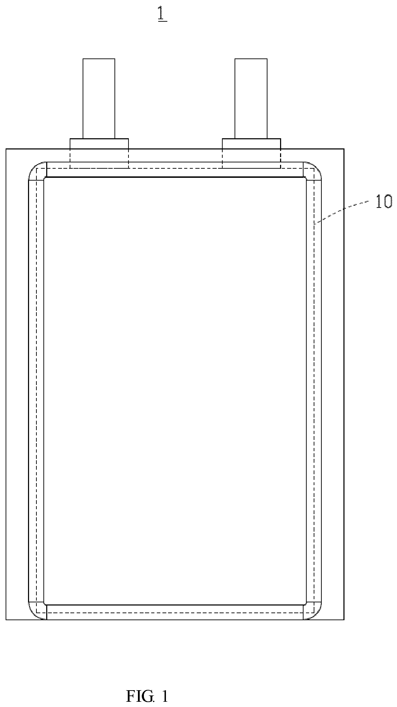

As shown in FIG. 1, an implementation of this application provides an electrochemical device 1. The electrochemical device 1 includes an electrode plate 10. In an embodiment, the electrochemical device 1 of this application takes a lithium-ion battery as an example to explain this application, but the electrochemical device 10 of this application is not limited to the lithium-ion battery.

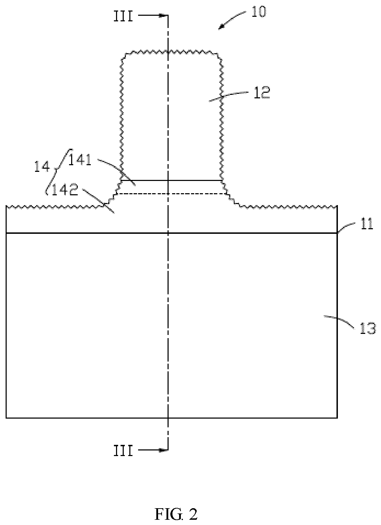

FIG. 2 is a schematic partial enlarged diagram of an electrode plate 10 of an electrochemical device 1 according to an implementation of this application. As shown in the figure, the electrode plate 10 includes a first current collector 11, a first tab 12, a first active material layer 13 and an insulation layer 14. The first tab 12 protrudes from the first current collector 11; the first active material layer 13 is disposed on at least one surface of the first current collector 11; and the insulation layer 14 is disposed along a side edge of the first current collector 11 towards the first tab 12 and abutted against the first active material layer 13. The insulation layer 14 includes a first region 141 and a second region 142, the first region 141 is disposed towards the first tab 12, and the second region 142 is disposed between the first region 141 and the first active material layer 13 and abutted against the first region 141 and the first active material layer 13. In a direction perpendicular to a surface of the first current collector 11 provided with the insulation layer 14, a thickness of the first region 141 of the insulation layer 14 is less than a thickness of the second region 142 of the insulation layer 14. In an implementation, the thickness of the first region 141 of the insulation layer 14 being less than the thickness of the second region 142 of the insulation layer 14 refers to a thickness of each position of the first region 141 of the insulation layer 14 being less than the thickness of the second region 142 of the insulation layer 14. In another implementation, the thickness of the first region 141 of the insulation layer 14 being less than the thickness of the second region 142 of the insulation layer 14 refers to a maximum thickness of the first region 141 of the insulation layer 14 being less than a minimum thickness of the second region 142 of the insulation layer 14.

The insulation layer 14 with the first region 141 and the second region 142 of different thicknesses is disposed on an outer side of the first active material layer 13, such that the thickness of the second region 142 towards the first active material layer 13 is greater than the thickness of the first region 141 away from the first active material layer 13. That is, a region of the insulation layer 14 towards an edge of the electrode plate 10 is thinned, but the thinned region is controlled not to extend to the first active material layer 13. In the case of eliminating a thick-edge morphology, the loss of an active material in the first active material layer 13 is avoided, on the premise of increasing an energy density of the electrochemical device 10, the thick-edge morphology is eliminated to overcome the problem of edge swelling of the electrode plate 10, and a thickness difference between the first active material layer 13 and the insulation layer 14 is reduced.

In a positive electrode of the embodiment of this application, the positive electrode is not particularly limited, as long as the purpose of this application can be achieved. For example, the positive electrode usually includes a positive current collector and a positive active material layer. The positive current collector is not particularly limited, and usually includes at least one of aluminum foil, aluminum alloy foil or a composite current collector. The positive active material layer includes a positive active material. The positive active material is not particularly limited, and may include at least one of lithium nickel cobalt manganate, lithium nickel cobalt aluminate, lithium iron phosphate, a lithium-rich manganese-based material, lithium cobaltate, lithium manganate, lithium manganese ferric phosphate or lithium titanate.

In a negative electrode of the embodiment of this application, the negative electrode is not particularly limited, as long as the purpose of this application can be achieved. For example, the negative electrode usually includes a negative current collector and a negative active material layer. The negative current collector is not particularly limited, and may include at least one of copper foil, aluminum foil, aluminum alloy foil or a composite current collector. The negative active material layer includes a negative active material. The negative active material is not particularly limited, and may include at least one of an artificial graphite, a natural graphite, mesocarbon microbeads, soft carbon, hard carbon, silicon, silicon carbon, lithium titanate, etc.

The electrode plate 10 may serve as the positive electrode or the negative electrode, and in the embodiment of this application, the electrode plate 10 serving as the positive electrode is taken as an example for explaining this application. Correspondingly, the first active material layer 13 may serve as the positive active material layer or the negative active material layer, in the embodiment of this application, the positive active material layer is taken as an example for explaining this application. In an embodiment, the first tab 12 protrudes from the first current collector 11, that is, the first tab 12 protrudes in a direction farther from a central region of the first current collector 11 than an edge of the first current collector 11. In the embodiment, the first tab 12 protruding from the first current collector 11 refers to the first tab 12 being able to have an integrated structure with the first current collector 11 and formed by extending and protruding from the edge of the first current collector 11. In other embodiments, the first tab 12 and the first current collector 11 may be of a non-integrated structure, and the first tab 12 may be connected to the first current collector 11 by, for example, welding before the electrode plate 10 is coated with the insulation layer 14.

In an embodiment, the first active material layer 13 is disposed on at least one surface of the first current collector 11. For example, the first active material layer 13 may be disposed on surfaces of two opposite sides of the first current collector 11.

In an embodiment, the insulation layer 14 is coated on a surface of the first current collector 11 and abutted against the first active material layer 13. The insulation layer 14 may be disposed at an edge of the first current collector 11 and at least covers an edge of the first current collector 11 after cutting so as to wrap cutting burrs located at the edge to avoid the burrs from puncturing a separator, and the insulation layer 14 further covers at least part of a region at a junction of the first current collector 11 and the first tab 12 so as to wrap cutting burrs at an end of the first tab 12 adjacent to the first current collector 11 to avoid the burrs from puncturing the separator.

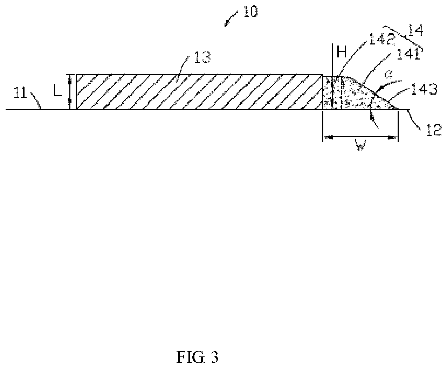

As shown in FIG. 3, the first region 141 includes a first surface 143, a plane where the first surface 143 is located intersects a plane where the first current collector 11 is located to form an acute angle $\alpha$, the second region 142 has a thickness of H, and the insulation layer has a width of W, where $W/H \geq \cot\alpha$.

In an embodiment, a section of the insulation layer 14 in a thickness direction of the electrode plate is a trapezoid. Specifically, a side of the insulation layer 14 adjacent to the first active material layer 13 (i.e. the second region 142) is substantially equal in thickness, a side of the insulation layer 14 away from the first active material layer 13 and towards the first tab 12 is the first region 141, and the thickness of the insulation layer 14 is gradually reduced from a junction of the first region 141 and the second region 142 to the side of the first tab 12 until the first surface 143 and the first current collector 11 intersect and form the acute angle $\alpha$.

In an embodiment, if $W/H < \cot\alpha$, it will cause the section of the insulation layer 14 in the thickness direction of the electrode plate not to be substantially the trapezoid, but substantially a triangle, during cutting of the first current collector 11 to obtain the first tab 12. That is, it may cause a part of the first active material layer 13 towards the insulation layer 14 to be removed, such that the overall energy density of the electrochemical device 1 is reduced, resulting in an energy loss, and that a boundary between the first active material layer 13 and the insulation layer 14 is blurring.

In an embodiment, the acute angle $\alpha$ ranges from 5° to 75°. If the acute angle $\alpha$ is less than 5°, it may cause the insulation layer 14 to be unable to meet the angle demand in the thinning process; and if the acute angle $\alpha$ is greater than 75°, it may cause an average thickness of the first region 141 of the insulation layer 14 to be excessively large, thereby causing the edge of the electrode plate 10 to be swollen. In an embodiment, the acute angle $\alpha$ may be obtained by acquiring an image of the section of the insulation layer 14 through a CCD camera and performing angle measurement on a region on the image corresponding to the acute angle $\alpha$.

In an embodiment, the thickness of the insulation layer 14, i.e. the thickness of the second region may be measured through a micrometer or the CCD camera. For example, the electrode plate 10 of a predetermined unit length is cut out or selected, at least one face of the electrode plate 10 includes sections of the first region 141 and the second region 142, and the second region 142 on the electrode plate 10 is measured for multiple times using the micrometer to acquire the thickness of the insulation layer 14. For example, the thickness of the second region 142 is measured for 15 times, respectively, and then an average value of multiple measurements is found as the thickness of the second region 142. Or, an image of the face including the sections of the first region 141 and the second region 142 is taken using the CCD camera, the thickness of the insulation layer 14 is acquired through a measuring tool (e.g. software) matched with the CCD camera, different images or different sites of the same image are repeatedly acquired for multiple times (e.g. 15 times), and an average value of thicknesses of multiple measurements is acquired to obtain the thickness of the insulation layer 14.

In an embodiment, the width of the insulation layer 14 may be measured through the CCD camera. For example, an image of the insulation layer 14 including the consecutive first region 141 and second region 142 is taken using the CCD camera. Specifically, the image may be acquired through the CCD camera in a low magnification state, the width of the insulation layer 14 is acquired through the measuring tool (e.g. the software) matched with the CCD camera in the case of setting edges of two sides of the insulation layer 14, different images or different sites of the same image are repeatedly acquired for multiple times (e.g. 15 times), and an average value of widths of multiple measurements is acquired to obtain the width of the insulation layer 14.

In an embodiment, the thickness H of the second region 142 ranges from 20 $\mu$m to 100 $\mu$m, and the width W of the insulation layer 14 ranges from 1 mm to 10 mm. If the thickness H of the second region 142 is less than 20 $\mu$m, the thickness of the insulation layer 14 may be less than a length of general burrs, and thus the burrs cannot be effectively wrapped, resulting in a short circuit risk of the electrochemical device 1; and if the thickness of the second region 142 is greater than 100 $\mu$m, it may cause the electrode plate 10 to be unable to meet parameter demands of cold calendering.

In an embodiment, a thickness L of the first active material layer 13 ranges from 30 $\mu$m to 200 $\mu$m. The thickness H of the second region 142 and the thickness L of the first active material layer 13 satisfy a following relationship: $0.3 \leq H/L \leq 0.8$. If a ratio is too small, the insulation layer 14 is too thin and cannot play a role in preventing the burrs; and if the ratio is too large, the insulation layer is too thick, and it is difficult to achieve a preset compacted density during cold calendering of the electrode plate 10.

In an embodiment, the first active material layer 13 has a coating weight ranging from 0.06 mg/mm$^2$ to 0.35 mg/mm$^2$. In an embodiment, a weight of the first active material layer 13 or the electrode plate 10 per unit area may be measured through a one over ten-thousand analytical balance, and is converted according to the following formula to obtain the coating weight, coating weight = (electrode plate weight - current collector weight)/electrode plate area, and an average value is found. If the coating weight is less than 0.06 mg/mm$^2$, the energy density is relatively low and difficult to meet demands, or the first active material layer 13 is relatively prone to problems of particles, scratches, or the like; and if the coating weight is greater than 0.35 mg/mm$^2$, the electrode plate 10 may have machining problems of being difficult to dry, being baked split, or the like, and because the corresponding thickness is relatively large, on the one hand, the coating process is difficult to achieve, and on the other hand, the first active material layer 13 (e.g. an active material of lithium iron phosphate) is prone to cracking, which is disadvantageous to diffusion of lithium ions and has a negative impact on electrochemical cycles.

In an embodiment, the first active material layer 13 has a compacted density ranging from 2 g/cc to 6 g/cc. In an embodiment, a weight of the first active material layer 13 or the electrode plate 10 per unit area may be measured through the one over ten-thousand analytical balance, a compacted density may further be obtained through a formula: (weight of electrode plate of insulation layer per unit area - weight of current collector)/thickness of insulation layer other than substrate, and an average value is found. If the compacted density is too low (less than 2 g/cc), there is less active material per unit volume, causing a low energy density that is difficult to meet the demands; and if the compacted density is too high (greater than 6 g/cc), the first active material layer 13 has an excessively small porosity, causing a reduced ion transport capacity or causing excessively large internal resistance (DCR), or the electrode plate 10 is embrittled, causing fracture to be prone to occurring during cold calendering.

In an embodiment, the insulation layer 14 includes an inorganic particle and a binder, the inorganic particle includes at least one of boehmite, aluminum oxide, zirconium oxide, boron oxide or hexagonal boron nitride, and the binder includes at least one of polyvinylidene fluoride, a vinylidene fluoride-hexafluoropropylene copolymer, polyamide, polyacrylonitrile, polyacrylate, polyacrylic acid, polyacrylate or sodium carboxymethylcellulose.

The electrochemical device of this application may further include a separator, configured to separate the positive electrode from the negative electrode, prevent an internal short circuit of the electrochemical device, allow electrolyte ions to pass through freely, and complete the role of an electrochemical charge and discharge process. In this application, the separator is not particularly limited, as long as the purpose of this application can be achieved. For example, at least one of a polyolefin (PO) separator dominated by polyethylene (PE) and polypropylene (PP), a polyester film (e.g. a polyethylene terephthalate (PET) film), a cellulose film, a polyimide (PI) film, a polyamide (PA) film, a spandex or aramid film, a woven film, a non-woven film (nonwoven fabric), a microporous film, a composite film, separator paper, a calendered film, a spun film, etc.

Further, the separator may include a substrate layer and a surface treatment layer. The substrate layer may be a non-woven fabric, a film or a composite film with a porous structure, and a material of the substrate layer may include at least one of polyethylene, polypropylene, polyethylene terephthalate and polyimide. In an embodiment, a polypropylene porous film, a polyethylene porous film, a polypropylene non-woven fabric, a polyethylene non-woven fabric or a polypropylene-polyethylene-polypropylene porous composite film may be used. In an embodiment, the surface treatment layer is disposed on at least one surface of the substrate layer, the surface treatment layer may be a polymer layer or an inorganic substance layer and may also be a mixed layer formed by a polymer and an inorganic substance.

Further, for example, the inorganic substance layer may include an inorganic particle and a binder. The inorganic particle is not particularly limited, and for example may be selected from at least one of aluminum oxide, silicon oxide, magnesium oxide, titanium oxide, hafnium dioxide, tin oxide, cerium dioxide, nickel oxide, zinc oxide, calcium oxide, zirconium oxide, yttrium oxide, silicon carbide, boehmite, aluminum hydroxide, magnesium hydroxide, calcium hydroxide, barium sulfate, etc. The binder is not particularly limited, and for example may be selected from a combination of one or more of polyvinylidene fluoride, a vinylidene fluoride-hexafluoropropylene copolymer, polyamide, polyacrylonitrile, polyacrylate, polyacrylic acid, polyacrylate, polyvinylpyrrolidone, polyvinyl ether, polymethyl methacrylate, polytetrafluoroethylene and polyhexafluoropropylene. For example, the polymer layer includes the polymer, and a material of the polymer includes at least one of polyamide, polyacrylonitrile, an acrylate polymer, polyacrylic acid, polyacrylate, polyvinylpyrrolidone, polyvinyl ether, polyvinylidene fluoride, poly(vinylidene fluoride-hexafluoropropylene), etc.

The electrochemical device of this application may further include an electrolyte, and the electrolyte may be one or more of a gel electrolyte, a solid electrolyte and an electrolytic solution, and the electrolytic solution includes a lithium salt and a non-aqueous solvent.

In an embodiment, when the electrochemical device 10 is a lithium-ion battery, the lithium salt is selected from one or more of $LiPF_6$, $LiBF_4$, $LiAsF_6$, $LiClO_4$, $LiB(C_6H_5)_4$, $LiCH_3SO_3$, $LiCF_3SO_3$, $LiN(SO_2CF_3)_2$, $LiC(SO_2CF_3)_3$, $LiSiF_6$, LiBOB and lithium difluoro(oxalato)borate. For instance, $LiPF_6$ may be selected as the lithium salt, because it can give high ionic conductivity and improve cycle performance.

The non-aqueous solvent may be a carbonate compound, a carboxylate compound, an ether compound, other organic solvents, or a combination thereof.

The foregoing carbonate compound may be a chain carbonate compound, a cyclic carbonate compound, a fluorocarbonate compound, or a combination thereof.

Examples of the foregoing chain carbonate compound are dimethyl carbonate (DMC), diethyl carbonate (DEC), dipropyl carbonate (DPC), methyl propyl carbonate (MPC), ethyl propyl carbonate (EPC), methyl ethyl carbonate (MEC), and a combination thereof. Examples of the cyclic carbonate compound are ethylene carbonate (EC), propylene carbonate (PC), butene carbonate (BC), vinyl ethylene carbonate (VEC), and a combination thereof. Examples of the fluorocarbonate compound are fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methyl-butene carbonate, 1-fluoro-1-methyl-butene carbonate, 1,2-difluoro-1-methyl-butene carbonate, 1,1,2-trifluoro-2-methyl-butene carbonate, trifluoro-methyl-butene carbonate, and a combination thereof.

Examples of the foregoing carboxylate compound are methyl formate, methyl acetate, ethyl acetate, n-propyl acetate, tert-butyl acetate, methyl propionate, ethyl propionate, propyl propionate, γ-butyrolactone, decalactone, valerolactone, mevalonic acid lactone, caprolactone, and a combination thereof.

Examples of the foregoing ether compound are dibutyl ether, tetraethylene glycol dimethyl ether, diethylene glycol dimethyl ether, 1,2-dimethoxyethane, 1,2-diethoxyethane, ethoxy-methoxy-ethane, 2-methyltetrahydrofuran, tetrahydrofuran, and a combination thereof.

Examples of the foregoing other organic solvents are dimethylsulfoxide, 1,2-dioxolane, sulfolane, methylsulfolane, 1,3-dimethyl-2-imidazolidone, N-methyl-2-pyrrolidone, formamide, dimethylformamide, acetonitrile, trimethyl phosphate, triethyl phosphate, trioctyl phosphate, phosphate, and a combination thereof.

The process of preparing the electrochemical device 1 is well known to a person skilled in the art, and is not particularly limited in this application. For example, the electrochemical device may be manufactured through the following process: making the positive electrode and the negative electrode overlap via the separator, performing operations such as winding and folding on them as required followed by putting them into a shell, injecting the electrolytic solution into a shell, and sealing the shell, where the separator used is the foregoing separator provided by this application. In addition, an overcurrent prevention element, a guide plate, and the like are placed into the shell, so as to prevent the rise of internal pressure, overcharge, and overdischarge of the electrochemical device.

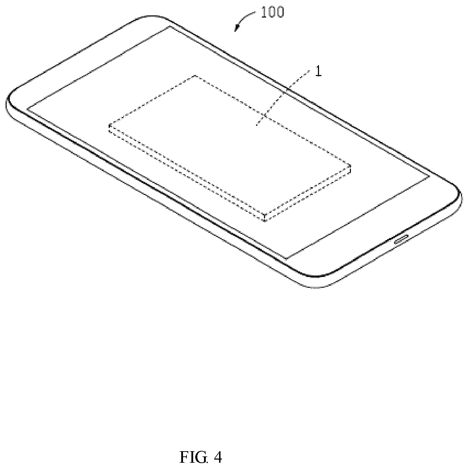

As shown in FIG. 4, it is a schematic three-dimensional diagram of an electronic device 100 provided by an embodiment of this application. This application further provides an electronic device 100. The electronic device 100 includes the electrochemical device 1. In FIG. 4, only the electronic device 100 being a mobile phone is taken as an example, and in other embodiments, the electronic device 100 of this application is not particularly limited, and may be any known electronic device used in the prior art. In some embodiments, the electronic device 100 may include, but is not limited to, a notebook computer, a pen-inputting computer, a mobile computer, an e-book player, a portable phone, a portable fax machine, a portable photocopier, a portable printer, a stereo headset, a video recorder, a liquid crystal display television, a handheld cleaner, a portable CD player, a mini disk, a transceiver, an electronic notepad, a calculator, a memory card, a portable voice recorder, a radio, a backup power supply, a motor, an automobile, a motorcycle, a power-assisted bicycle, a bicycle, a lighting appliance, a toy, a game console, a watch, an electric tool, a flashlight, a camera, a large household battery, a lithium-ion capacitor, and the like.

Electrode plate edge thickness COV test:

1) removing an electrode plate from a finished battery in an environment of (25±3)°C, and wiping a residual electrolytic solution on a surface of the electrode plate with dust-free paper;
2) cutting the electrode plate to obtain an electrode plate sample of a certain area size; and
3) measuring a thickness of an electrode plate edge of a side of the electrode plate sample in 2) towards a tab through a micrometer, sequentially testing thickness values of 15 different points along the electrode plate edge, and calculating a COV value of all the thickness values of the test points.

Battery volume energy density test:

1) charging a battery at a constant current to 3.6 V in an environment of (25±3)°C, and then discharging to 2.5 V at a rate of 0.5 C to obtain an actual capacity Cap;
2) a battery discharge plateau is E;
3) actually measuring a length, width and height of the battery, measuring ten points on each face, and finding an average value, where volume V = length * width * height; and

$$\text{volume energy density VED} = \text{Cap} * E/V.$$

Embodiment 1

<1-2. Preparing a positive electrode plate>

Mixing lithium cobaltate as a positive active material, acetylene black and polyvinylidene difluoride (PVDF) at a mass ratio of 94: 3: 3, subsequently, adding N-methylpyrrolidone (NMP) as a solvent, blending the mixture into a slurry with a solid content of 75%, and stirring the slurry well. Coating one surface of a 12-$\mu$m thick aluminum foil with the slurry evenly, drying the aluminum foil at 90°C, and cold calendering the aluminum foil to obtain a positive electrode plate with a positive active material layer thickness of 100 $\mu$m. Subsequently, repeating the foregoing steps on the other surface of the positive electrode plate to obtain the positive electrode plate coated with the positive active material layer on both sides, where the positive active material layer (first active material layer) has a thickness L of 100 $\mu$m, the first active material layer has a coating weight of 0.2 mg/mm$^2$, and the first active material layer has a compacted density of 2.0 g/cc.

An insulation layer is disposed at an edge of the positive active material layer on a side of the positive electrode plate towards the tab, where compositions (mass percentage) of the insulation layer are PVDF: boehmite = 40%: 60%, a second region of the insulation layer has a thickness H of 20 $\mu$m, the insulation layer has a width W of 1.2 mm, and $\cot\alpha$ corresponding to an acute angle $\alpha$ is 1.

Cutting the positive electrode plate into a size of 74 mm $\times$ 867 mm, and welding a tab onto the positive electrode plate for use.

<1-3. Preparing a negative electrode plate>

Mixing artificial graphite as a negative active material, acetylene black, styrene-butadiene rubber and sodium carboxymethylcellulose at a mass ratio of 96: 1: 1.5: 1.5, subsequently, adding deionized water as a solvent, blending the mixture into a slurry with a solid content of 70%, and stirring the slurry well. Coating one surface of 8-$\mu$m thick aluminum foil with the slurry evenly, drying the aluminum foil at 110°C, and cold calendering the aluminum foil to to obtain the negative electrode plate coated with a 150-$\mu$m thick negative active material layer on a single side. subsequently, repeating the foregoing steps on the other surface of the negative electrode plate to obtain the negative electrode plate coated with the negative active material layer on both sides. Cutting the negative electrode plate into a size of 74 mm $\times$ 867 mm, and welding a tab onto the negative electrode plate for use.

<1-5. Preparing an electrolytic solution>

Mixing ethylene carbonate (EC), diethyl carbonate (DEC), propylene carbonate (PC), propyl propionate (PP) and vinylene carbonate (VC) as non-aqueous organic solvents at a mass ratio of 20: 30: 20: 28: 2 in an environment in which the moisture content is less than 10 ppm. Subsequently, adding lithium hexafluorophosphate (LiPF6) into the non-aqueous organic solvents for dissolving, and mixing the mixture well to obtain an electrolytic solution, where the mass ratio of LiPF6 to the non-aqueous organic solvents is 8: 92.

<1-6. Preparing a lithium-ion battery>

Winding the foregoing positive electrode plate and the foregoing negative electrode plate, where the foregoing positive electrode plate and the foregoing negative electrode plate are separated by a polyethylene (PE) film as a separator, thus preparing an electrode assembly. Putting the electrode assembly into an aluminum plastic film package, removing water at 80°C, injecting the prepared electrolytic solution, and performing steps such as vacuum sealing, static standing, chemical formation, and shaping to obtain a lithium-ion battery.

Embodiment 2

Embodiment 2 has the same lithium-ion battery preparation process as Embodiment 1, but component parameters are different. The positive active material (first active material layer) has a thickness L of 100 $\mu$m, the first active material layer has a coating weight of 0.2 mg/mm$^2$, the first active material layer has a compacted density of 2.0 g/cc, compositions (mass percentage) of the insulation layer are PVDF: boehmite = 40%: 60%, the second region of the insulation layer has a thickness H of 40 $\mu$m, the insulation layer has a width W of 1.2 mm, and cot$\alpha$ corresponding to the acute angle $\alpha$ is 1.

Embodiment 3

Embodiment 3 has the same lithium-ion battery preparation process as Embodiment 1, but component parameters are different. The positive active material (first active material layer) has a thickness L of 100 $\mu$m, the first active material layer has a coating weight of 0.2 mg/mm$^2$, the first active material layer has a compacted density of 2.0 g/cc, compositions (mass percentage) of the insulation layer are PVDF: boehmite = 40%: 60%, the second region of the insulation layer has a thickness H of 50 $\mu$m, the insulation layer has a width W of 1.2 mm, and cot$\alpha$ corresponding to the acute angle $\alpha$ is 1.

Embodiment 4

Embodiment 4 has the same lithium-ion battery preparation process as Embodiment 1, but component parameters are different. The positive active material (first active material layer) has a thickness L of 100 $\mu$m, the first active material layer has a coating weight of 0.2 mg/mm$^2$, the first active material layer has a compacted density of 2.0 g/cc, compositions (mass percentage) of the insulation layer are PVDF: boehmite = 40%: 60%, the second region of the insulation layer has a thickness H of 80 $\mu$m, the insulation layer has a width W of 1.2 mm, and cot$\alpha$ corresponding to the acute angle $\alpha$ is 1.

Embodiment 5

Embodiment 5 has the same lithium-ion battery preparation process as Embodiment 1, but component parameters are different. The positive active material (first active material layer) has a thickness L of 125 $\mu$m, the first active material layer has a coating weight of 0.2 mg/mm$^2$, the first active material layer has a compacted density of 2.0 g/cc, compositions (mass percentage) of the insulation layer are PVDF: boehmite = 40%: 60%, the second region of the insulation layer has a thickness H of 100 $\mu$m, the insulation layer has a width W of 1.2 mm, and cot$\alpha$ corresponding to the acute angle $\alpha$ is 1.

Embodiment 6

Embodiment 6 has the same lithium-ion battery preparation process as Embodiment 1, but component parameters are different. The positive active material (first active material layer) has a thickness L of 100 $\mu$m, the first active material layer has a coating weight of 0.2 mg/mm$^2$, the first active material layer has a compacted density of 2.0 g/cc, compositions (mass percentage) of the insulation layer are PVDF: boehmite = 40%: 60%, the second region of the insulation layer has a thickness H of 50 $\mu$m, the insulation layer has a width W of 1 mm, and cot$\alpha$ corresponding to the acute angle $\alpha$ is 1.

Embodiment 7

Embodiment 7 has the same lithium-ion battery preparation process as Embodiment 1, but component parameters are different. The positive active material (first active material layer) has a thickness L of 100 $\mu$m, the first active material layer has a coating weight of 0.2 mg/mm$^2$, the first active material layer has a compacted density of 2.0 g/cc, compositions (mass percentage) of the insulation layer are PVDF: boehmite = 40%: 60%, the second region of the insulation layer has a thickness H of 50 $\mu$m, the insulation layer has a width W of 1.2 mm, and cot$\alpha$ corresponding to the acute angle $\alpha$ is 1.

Embodiment 8

Embodiment 8 has the same lithium-ion battery preparation process as Embodiment 1, but component parameters are different. The positive active material (first active material layer) has a thickness L of 100 $\mu$m, the first active material layer has a coating weight of 0.2 mg/mm$^2$, the first active material layer has a compacted density of 2.0 g/cc, compositions (mass percentage) of the insulation layer are PVDF: boehmite = 40%: 60%, the second region of the insulation layer has a thickness H of 80 $\mu$m, the insulation layer has a width W of 10 mm, and cot$\alpha$ corresponding to the acute angle $\alpha$ is 1.

Embodiment 9

Embodiment 9 has the same lithium-ion battery preparation process as Embodiment 1, but component parameters are different. The positive active material (first active material layer) has a thickness L of 100 $\mu$m, the first active material layer has a coating weight of 0.2 mg/mm$^2$, the first active material layer has a compacted density of 2.0 g/cc, compositions (mass percentage) of the insulation layer are PVDF: boehmite = 40%: 60%, the second region of the insulation layer has a thickness H of 30 $\mu$m, the insulation layer has a width W of 1.2 mm, and cot$\alpha$ corresponding to the acute angle $\alpha$ is 1.

Embodiment 10

Embodiment 10 has the same lithium-ion battery preparation process as Embodiment 1, but component parameters are different. The positive active material (first active material layer) has a thickness L of 100 $\mu$m, the first active material layer has a coating weight of 0.2 mg/mm$^2$, the first active material layer has a compacted density of 2.0 g/cc, compositions (mass percentage) of the insulation layer are PVDF: boehmite = 40%: 60%, the second region of the insulation layer has a thickness H of 50 $\mu$m, the insulation layer has a width W of 10 mm, and cot$\alpha$ corresponding to the acute angle $\alpha$ is 0.3.

Embodiment 11

Embodiment 11 has the same lithium-ion battery preparation process as Embodiment 1, but component parameters are different. The positive active material (first active material layer) has a thickness L of 100 $\mu$m, the first active material layer has a coating weight of 0.2 mg/mm$^2$, the first active material layer has a compacted density of 2.0 g/cc, compositions (mass percentage) of the insulation layer are PVDF: boehmite = 40%: 60%, the second region of the insulation layer has a thickness H of 80 $\mu$m, the insulation layer has a width W of 10 mm, and cot$\alpha$ corresponding to the acute angle $\alpha$ is 1.

Embodiment 12

Embodiment 12 has the same lithium-ion battery preparation process as Embodiment 1, but component parameters are different. The positive active material (first active material layer) has a thickness L of 30 $\mu$m, the first active material layer has a coating weight of 0.06 mg/mm$^2$, the first active material layer has a compacted density of 2.0 g/cc, compositions (mass percentage) of the insulation layer are PVDF: boehmite = 40%: 60%, the second region of the insulation layer has a thickness H of 24 $\mu$m, the insulation layer has a width W of 1.2 mm, and cot$\alpha$ corresponding to the acute angle $\alpha$ is 1.

Embodiment 13

Embodiment 13 has the same lithium-ion battery preparation process as Embodiment 1, but component parameters are different. The positive active material (first active material layer) has a thickness L of 175 $\mu$m, the first active material layer has a coating weight of 0.35 mg/mm$^2$, the first active material layer has a compacted density of 2.0 g/cc, compositions (mass percentage) of the insulation layer are PVDF: boehmite = 40%: 60%, the second region of the insulation layer has a thickness H of 88 $\mu$m, the insulation layer has a width W of 1.2 mm, and cot$\alpha$ corresponding to the acute angle $\alpha$ is 11.4.

Embodiment 14

Embodiment 14 has the same lithium-ion battery preparation process as Embodiment 1, but component parameters are different. The positive active material (first active material layer) has a thickness L of 88 $\mu$m, the first active material layer has a coating weight of 0.35 mg/mm$^2$, the first active material layer has a compacted density of 4.0 g/cc, compositions (mass percentage) of the insulation layer are PVDF: boehmite = 40%: 60%, the second region of the insulation layer has a thickness H of 44 $\mu$m, the insulation layer has a width W of 1.2 mm, and cot$\alpha$ corresponding to the acute angle $\alpha$ is 1.

Embodiment 15

Embodiment 15 has the same lithium-ion battery preparation process as Embodiment 1, but component parameters are different. The positive active material (first active material layer) has a thickness L of 58 $\mu$m, the first active

material layer has a coating weight of 0.35 mg/mm$^2$, the first active material layer has a compacted density of 6.0 g/cc, compositions (mass percentage) of the insulation layer are PVDF: boehmite = 40%: 60%, the second region of the insulation layer has a thickness H of 30 μm, the insulation layer has a width W of 1.2 mm, and cotα corresponding to the acute angle α is 1.

Embodiment 16

Embodiment 16 has the same lithium-ion battery preparation process as Embodiment 1, but component parameters are different. The positive active material (first active material layer) has a thickness L of 100 μm, the first active material layer has a coating weight of 0.2 mg/mm$^2$, the first active material layer has a compacted density of 2.0 g/cc, compositions (mass percentage) of the insulation layer are polyacrylic acid: zirconium oxide = 30%: 70%, the second region of the insulation layer has a thickness H of 50 μm, the insulation layer has a width W of 1.2 mm, and cotα corresponding to the acute angle α is 1.

Embodiment 17

Embodiment 17 has the same lithium-ion battery preparation process as Embodiment 1, but component parameters are different. The positive active material (first active material layer) has a thickness L of 100 μm, the first active material layer has a coating weight of 0.2 mg/mm$^2$, the first active material layer has a compacted density of 2.0 g/cc, compositions (mass percentage) of the insulation layer are PVDF: boehmite = 40%: 60%, the second region of the insulation layer has a thickness H of 87.5 μm, the insulation layer has a width W of 1 mm, and cotα corresponding to the acute angle α is 11.4.

Comparative embodiment 1

Comparative Embodiment 1 has the same lithium-ion battery preparation process as Embodiment 1, but component parameters are different. The positive active material (first active material layer) has a thickness L of 30 μm, the first active material layer has a coating weight of 0.045 mg/mm$^2$, the first active material layer has a compacted density of 1.5 g/cc, compositions (mass percentage) of the insulation layer are PVDF: boehmite = 40%: 60%, the second region of the insulation layer has a thickness H of 30 μm, the insulation layer has a width W of 1 mm, and the insulation layer is not thinned.

Comparative embodiment 2

Comparative Embodiment 2 has the same lithium-ion battery preparation process as Embodiment 1, but component parameters are different. The positive active material (first active material layer) has a thickness L of 100 μm, the first active material layer has a coating weight of 0.2 mg/mm$^2$, the first active material layer has a compacted density of 2.0 g/cc, compositions (mass percentage) of the insulation layer are PVDF: boehmite = 40%: 60%, the second region of the insulation layer has a thickness H of 50 μm, the insulation layer has a width W of 1.2 mm, and the insulation layer is not thinned.

Comparative embodiment 3

Comparative Embodiment 3 has the same lithium-ion battery preparation process as Embodiment 1, but component parameters are different. The positive active material (first active material layer) has a thickness L of 100 μm, the first active material layer has a coating weight of 0.2 mg/mm$^2$, the first active material layer has a compacted density of 2.0 g/cc, compositions (mass percentage) of the insulation layer are PVDF: boehmite = 40%: 60%, the second region of the insulation layer has a thickness H of 0 μm, the insulation layer has a width W of 1.2 mm, and the insulation layer is not thinned.

In the foregoing Embodiments 1 to 17 and Comparative Embodiments 1 to 3, processes of winding, cold calendering, etc. are performed, the appearances of the electrode plates are observed, and energy densities are calculated, as shown in Table 1 below.

Table 1

| Embodiment | Thickness of second region of insulation layer H/μm | Width of insulation layer W/mm | W/H | cotα | Thickness of first active material layer L/μm | H/L | Coating weight of active layer (mg/mm2) | Compacted density of active layer (g/cc) | Compositions (mass percentage) of insulation layer | Electrode plate appearance | Volume energy density VED/Wh/L |
|---|---|---|---|---|---|---|---|---|---|---|---|
| 1 | 20 | 1.2 | 60 | 1 | 100 | 0.2 | 0.2 | 2.0 | PVDF: boehmite = 40%: 60% | No swelling at edge of electrode plate, and thickness of edge of electrode plate COV ≤ 0.5% | 303.7 |
| 2 | 40 | 1.2 | 30 | 1 | 100 | 0.4 | 0.2 | 2.0 | PVDF: boehmite = 40%: 60% | No swelling at edge of electrode plate, and thickness of edge of electrode plate COV ≤ 0.5% | 308.4 |
| 3 | 50 | 1.2 | 24 | 1 | 100 | 0.5 | 0.2 | 2.0 | PVDF: boehmite = 40%: 60% | No swelling at edge of electrode plate. and thickness of edge of electrode plate COV < 0.5% | 305.9 |
| 4 | 80 | 1.2 | 15 | 1 | 100 | 0.8 | 0.2 | 2.0 | PVDF: boehmite = 40%: 60% | No swelling at edge of electrode plate, and thickness of edge of electrode plate COV ≤ 0.5% | 304.1 |

(continued)

| Embodiment | Thickness of second region of insulation layer H/μm | Width of insulation layer W/mm | W/H | cotα | Thickness of first active material layer L/μm | H/L | Coating weight of active layer(mg/mm2) | Compacted density of active layer (g/cc) | Compositions (mass percentage) of insulation layer | Electrode plate appearance | Volume energy density VED/Wh/L |
|---|---|---|---|---|---|---|---|---|---|---|---|
| 5 | 100 | 1.2 | 12 | 1 | 125 | 0.8 | 0.25 | 2.0 | PVDF: boehmite = 40%: 60% | No swelling at edge of electrode plate, and thickness of edge of electrode plate COV ≤ 0.5% | 308.1 |
| 6 | 50 | 1 | 20 | 1 | 100 | 0.5 | 0.2 | 2.0 | PVDF: boehmite = 40%: 60% | No swelling at edge of electrode plate. and thickness of edge of electrode plate COV < 0.5% | 306.4 |
| 7 | 50 | 1.2 | 24 | 1 | 100 | 0.5 | 0.2 | 2.0 | PVDF: boehmite = 40%: 60% | No swelling at edge of electrode plate, and thickness of edge of electrode plate COV ≤ 0.5% | 303.4 |
| 8 | 80 | 10 | 125 | 1 | 100 | 0.8 | 0.2 | 2.0 | PVDF: boehmite = 40%: 60% | No swelling at edge of electrode plate, and thickness of edge of electrode plate COV ≤ 0.5% | 309.0 |

(continued)

| Emb odi ment | Thic knes s of seco nd regi on of insul atio n laye r H/μ m | Widt h of insul ation layer W/ mm | W/H | cotα | Thi ckn ess of first acti ve mat eria l laye r L/μ m | H/ L | Coa ting wei ght of acti ve laye r(mg /m m2) | Com pact ed dens ity of activ e laye r (g/c c) | Compositio ns (mass percentage) of insulation layer | Electrode plate appearance | Volume energy density VED/ Wh/L |
|---|---|---|---|---|---|---|---|---|---|---|---|
| 9 | 30 | 1.2 | 40 | 1 | 100 | 0. 3 | 0.2 | 2.0 | PVDF: boehmite = 40%: 60% | No swelling at edge of electrode plate, and thickness of edge of electrode plate COV ≤ 0.5% | 301.4 |
| 10 | 50 | 10 | 50 | 0.3 | 100 | 0. 5 | 0.2 | 2.0 | PVDF: boehmite = 40%: 60% | No swelling at edge of electrode plate. and thickness of edge of electrode plate COV < 0.5% | 307.6 |
| 11 | 80 | 10 | 50 | 1 | 100 | 0. 5 | 0.2 | 2.0 | PVDF: boehmite = 40%: 60% | No swelling at edge of electrode plate, and thickness of edge of electrode plate COV ≤ 0.5% | 300.2 |
| 12 | 24 | 1.2 | 50 | 1 | 30 | 0. 8 | 0.06 | 2.0 | PVDF: boehmite = 40%: 60% | No swelling at edge of electrode plate, and thickness of edge of electrode plate COV ≤ 0.5% | 201.4 |

(continued)

| Embodiment | Thickness of second region of insulation layer H/μm | Width of insulation layer W/mm | W/H | cotα | Thickness of first active material layer L/μm | H/L | Coating weight of active layer (mg/mm2) | Compacted density of active layer (g/cc) | Compositions (mass percentage) of insulation layer | Electrode plate appearance | Volume energy density VED/Wh/L |
|---|---|---|---|---|---|---|---|---|---|---|---|
| 13 | 88 | 1.2 | 14 | 11.4 | 175 | 0.5 | 0.35 | 2.0 | PVDF: boehmite = 40%: 60% | No swelling at edge of electrode plate, and thickness of edge of electrode plate COV ≤ 0.5% | 448.2 |
| 14 | 44 | 1.2 | 27 | 1 | 88 | 0.5 | 0.35 | 4.0 | PVDF: boehmite = 40%: 60% | No swelling at edge of electrode plate, and thickness of edge of electrode plate COV ≤ 0.5% | 375.2 |
| 15 | 30 | 1.2 | 40 | 1 | 58 | 0.5 | 0.35 | 6.0 | PVDF: boehmite = 40%: 60% | No swelling at edge of electrode plate, and thickness of edge of electrode plate COV ≤ 0.5% | 408.4 |
| 16 | 50 | 1.2 | 24 | 1 | 100 | 0.5 | 0.2 | 2.0 | Polyacrylic acid: zirconium oxide = 30%: 70% | No swelling at edge of electrode plate, and thickness of edge of electrode plate COV ≤ 0.5% | 302.6 |

(continued)

| Emb odi ment | Thic knes s of seco nd regi on of insul atio n laye r H/μ m | Widt h of insul atio n laye r W/ mm | W/H | cotα | Thi ckn ess of first acti ve mat eria l laye r L/μ m | H/ L | Coa ting wei ght of acti ve laye r (mg /m m2) | Com pact ed dens ity of activ e laye r (g/c c) | Compositio ns (mass percentage) of insulation layer | Electrode plate appearance | Volume energy density VED/ Wh/L |
|---|---|---|---|---|---|---|---|---|---|---|---|
| 17 | 87.5 | 1 | 11 | 11.4 | 100 | 0. 9 | 0.2 | 2.0 | PVDF: boehmite = 40%: 60% | No swelling at edge of electrode plate, and thickness of edge of of electrode plate COV ≤ 0.5% | 253.1 |
| Com parat ive emb odi ment 1 | 30 | 1 | 33 | / | 30 | 1. 0 | 0.04 5 | 1.5 | PVDF: boehmite = 40%: 60% | No swelling at edge of electrode plate, and thickness of edge of electrode plate COV = 0.7% | 180.5 |
| Com parat ive emb odi ment 2 | 50 | 1.2 | 24 | / | 100 | 0. 5 | 0.2 | 2.0 | PVDF: boehmite = 40%: 60% | Swelling at edge of electrode plate, and thickness of edge of electrode plate COV ≤ 0.5% | / |
| Com parat ive emb odi ment 3 | 0 | 1.2 | / | / | 100 | 0. 0 | 0.2 | 2.0 | PVDF: boehmite = 40%: 60% | Swelling at edge of electrode plate, and thickness of edge of electrode plate COV > 1% | / |

Compared with the prior art, according to the electrochemical device of this application, by disposing the first active material layer and the insulation layer which are abutted against on the electrode plate, the insulation layer covers part of the edge cutting burrs of the first current collector and the tab to avoid a short circuit of the electrochemical device; by disposing the thinned first region on the outer side of the insulation layer, and controlling the ratio between the thickness of the insulation layer and the thickness of the first active material layer and the thinned shape of the insulation layer, in the case of ensuring safety performance of the electrochemical device, the stress uniformity of the electrode plate in the rolling process can be improved, thus improving overall performance of the electrochemical device. Hereinafter, the specific implementations of this application are described with reference to the accompanying drawings. However, a person of ordinary skill in the art can understand that various modifications and replacements may further be made to the specific implementations of this application without departing from the spirit and scope of this application. These modifications and replacements all fall within the scope defined by this application.

## Claims

1. An electrochemical device, comprising an electrode plate, **characterized in that** the electrode plate comprises:

   a first current collector;
   a first tab protruding from the first current collector;
   a first active material layer disposed on at least one surface of the first current collector; and
   an insulation layer disposed along a side edge of the first current collector towards the first tab and abutted against the first active material layer;
   wherein the insulation layer comprises a first region and a second region, the first region is disposed towards the first tab, the second region is disposed away from the first tab and abutted against the first active material layer, and a thickness of the first region of the insulation layer is less than a thickness of the second region of the insulation layer

2. The electrochemical device according to claim 1, **characterized in that**, the first region comprises a first surface; a plane where the first surface is located intersects a plane where the first current collector is located to form an acute angle $\alpha$, the second region has a thickness of H, and the insulation layer has a width of W, wherein $W/H \geq \cot \alpha$.

3. The electrochemical device according to claim 2, **characterized in that**, the acute angle $\alpha$ ranges from 5° to 75°.

4. The electrochemical device according to claim 2, **characterized in that**, the thickness H of the second region ranges from 20 $\mu$m to 100 $\mu$m, and the width W of the insulation layer ranges from 1 mm to 10 mm.

5. The electrochemical device according to claim 1, **characterized in that**, a thickness L of the first active material layer ranges from 30 $\mu$m to 200 $\mu$m.

6. The electrochemical device according to claim 1, **characterized in that**, the second region has a thickness of H, and the thickness H of the second region and a thickness L of the first active material layer satisfy a following relationship: $0.3 \leq H/L \leq 0.8$.

7. The electrochemical device according to claim 1, **characterized in that**, the first active material layer has a coating weight ranging from 0.06 mg/mm$^2$ to 0.35 mg/mm$^2$.

8. The electrochemical device according to claim 1, **characterized in that**, the first active material layer has a compacted density ranging from 2 g/cc to 6 g/cc.

9. The electrochemical device according to claim 1, **characterized in that**, the insulation layer comprises an inorganic particle and a binder; the inorganic particle comprises at least one of boehmite, aluminum oxide, zirconium oxide, boron oxide or hexagonal boron nitride, and the binder comprises at least one of polyvinylidene fluoride, a vinylidene fluoride-hexafluoropropylene copolymer, polyamide, polyacrylonitrile, polyacrylate, polyacrylic acid, polyacrylate or sodium carboxymethylcellulose.

10. An electronic device, **characterized in that**, the electronic device comprises the electrochemical device according to any one of claims 1 to 9.

<u>1</u>

FIG. 1

FIG. 2

FIG. 3

FIG. 4

## INTERNATIONAL SEARCH REPORT

| International application No. |
| --- |
| **PCT/CN2021/081625** |

**A.    CLASSIFICATION OF SUBJECT MATTER**

H01M 4/13(2010.01)i;   H01M 10/0587(2010.01)i

According to International Patent Classification (IPC) or to both national classification and IPC

**B.    FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

DWPI; SIPOABS; CNABS; CNTXT; CNKI: 绝缘, 无机, 电极, 集电, 厚度, 振实密度, 减薄, insulat+, inorganic, electrode, collect+, thickness, tap density, thinning

**C.    DOCUMENTS CONSIDERED TO BE RELEVANT**

| Category* | Citation of document, with indication, where appropriate, of the relevant passages | Relevant to claim No. |
| --- | --- | --- |
| X | CN 111129506 A (TOYOTA MOTOR ORPORATION) 08 May 2020 (2020-05-08) description, paragraphs 9-301, and figure 6 | 1-4, 6, 9-10 |
| Y | CN 111129506 A (TOYOTA MOTOR CORPORATION) 08 May 2020 (2020-05-08) description, paragraphs 9-301, and figure 6 | 5, 7-8 |
| Y | CN 111342145 A (EVE ENERGY CO., LTD.) 26 June 2020 (2020-06-26) description, paragraphs 2-95 | 5, 7-8 |
| A | CN 206250284 U (DONGGUAN AMPEREX TECHNOLOGY LIMITED) 13 June 2017 (2017-06-13) entire document | 1-10 |
| A | CN 108886128 A (LITHIUM ENERGY AND POWER GMBH AND CO. KG) 23 November 2018 (2018-11-23) entire document | 1-10 |
| A | CN 211605277 U (WANXIANG YIERSAN CO., LTD. et al.) 29 September 2020 (2020-09-29) entire document | 1-10 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **06 December 2021** | **23 December 2021** |

| Name and mailing address of the ISA/CN | Authorized officer |
| --- | --- |
| China National Intellectual Property Administration (ISA/CN) No. 6, Xitucheng Road, Jimenqiao, Haidian District, Beijing 100088, China | |
| Facsimile No. **(86-10)62019451** | Telephone No. |

Form PCT/ISA/210 (second sheet) (January 2015)

<table>
<tr><td colspan="2" align="center">INTERNATIONAL SEARCH REPORT<br>Information on patent family members</td><td colspan="2">International application No.<br><br>**PCT/CN2021/081625**</td></tr>
<tr><td>Patent document<br>cited in search report</td><td>Publication date<br>(day/month/year)</td><td>Patent family member(s)</td><td>Publication date<br>(day/month/year)</td></tr>
<tr><td>CN   111129506  A</td><td>08 May 2020</td><td>JP   2020072007  A<br>KR  20200049640  A<br>US   2020136133  A1<br>DE  102019216077  A1</td><td>07 May 2020<br>08 May 2020<br>30 April 2020<br>30 April 2020</td></tr>
<tr><td>CN   111342145  A</td><td>26 June 2020</td><td>None</td><td></td></tr>
<tr><td>CN   206250284  U</td><td>13 June 2017</td><td>None</td><td></td></tr>
<tr><td>CN   108886128  A</td><td>23 November 2018</td><td>DE  112017001858  T5<br>WO   2017174374  A1<br>JP   2017188371  A</td><td>27 December 2018<br>12 October 2017<br>12 October 2017</td></tr>
<tr><td>CN   211605277  U</td><td>29 September 2020</td><td>None</td><td></td></tr>
</table>

Form PCT/ISA/210 (patent family annex) (January 2015)